# EUROPEAN PATENT APPLICATION

(11) **EP 4 560 783 A1**
(43) Date of publication of application: **28.05.2025**
(21) Application number: 24194189.7
(22) Date of filing: 12.08.2024
(51) Int. Cl.: H01M 10/52, H01M 50/242, H01M 50/595, H01M 10/0525, H01M 50/103, H01M 50/105, H01M 50/107, H01M 50/119

(54) **RECHARGEABLE LITHIUM BATTERY**

(30) Priority: 22.11.2023 KR 20230163559; 10.07.2024 KR 20240091279
(71) Applicant: SAMSUNG SDI CO., LTD., Giheung-gu Yongin-si, Gyeonggi-do 17084 (KR)
(72) Inventor: LEE, Tae Jin, Yongin-si, Gyeonggi-do 17084 (KR)
(74) Representative: Michalski Hüttermann & Partner Patentanwälte mbB

(57) **Abstract**

A rechargeable lithium battery includes an electrode assembly, a battery case housing the electrode assembly, and a gas capturing layer between the battery case and the electrode assembly, where the gas capturing layer includes a compound represented by one selected from among Chemical Formula 1 to Chemical Formula 4:

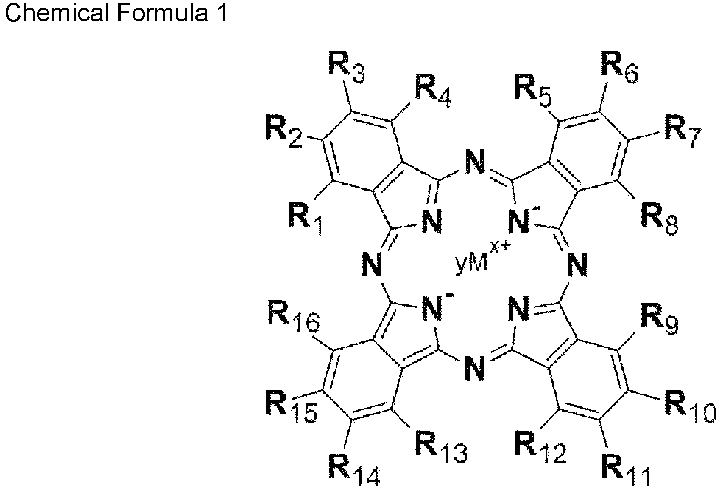

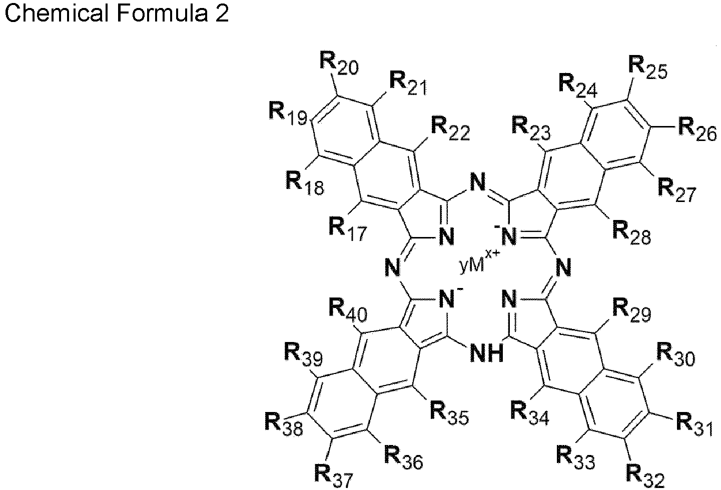

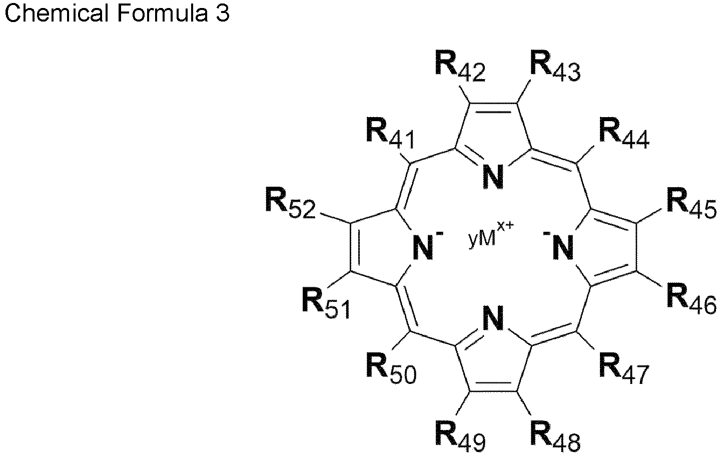

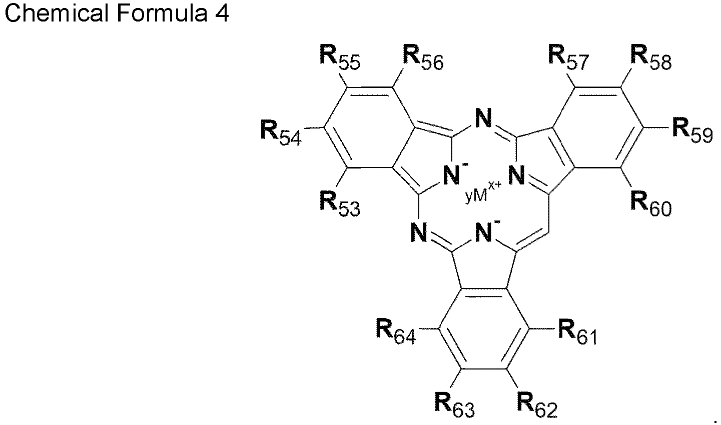

## Description

### BACKGROUND

### 1. Field

One or more embodiments of the present disclosure relate to a rechargeable lithium battery.

### 2. Description of Related Art

The investigations for improving capacity, energy density, and/or cycle-life characteristics of rechargeable batteries utilized as power sources of the one or more suitable mobile devices and/or electric vehicles have been progressing.

Recently, the rechargeable batteries which are capable of fast charging and have good or suitable safety such as not causing thermal runaway issues have been demanded and/or desired.

This requires progressing research for improving fast charging and safety of rechargeable batteries, while satisfying and maintaining the physical properties such as capacity of the batteries.

### SUMMARY

One or more aspects of embodiments of the present disclosure are directed toward a rechargeable lithium battery exhibiting excellent or suitable swelling characteristic and safety. Additional aspects will be set forth in part in the description which follows and, in part, will be apparent from the description, or may be learned by practice of the presented embodiments of the disclosure.

According to one or more embodiments of the present disclosure, a rechargeable lithium battery includes: an electrode assembly; a battery case housing the electrode assembly; and a gas capturing layer between the electrode assembly and the battery case, wherein the gas capturing layer includes a compound represented by one selected from among Chemical Formulas 1 to 4.

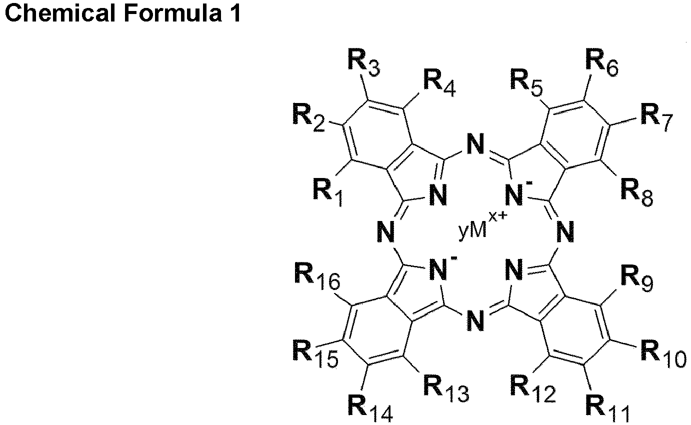

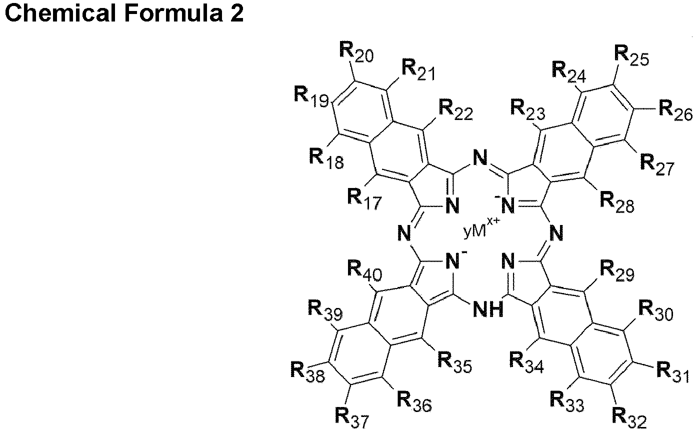

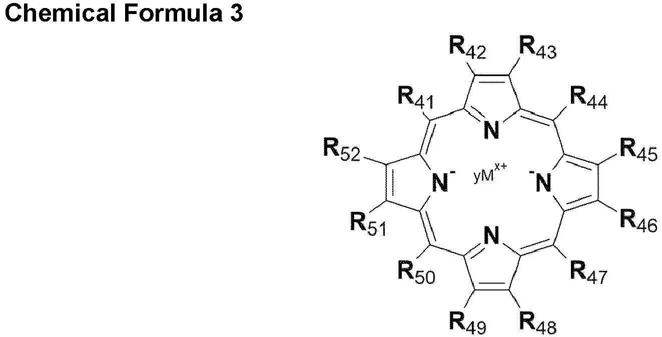

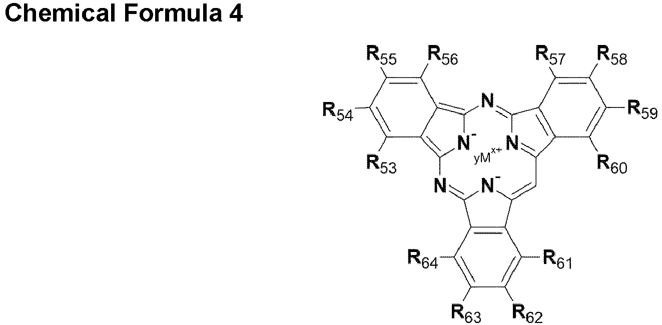

In Chemical Formulas 1 to 4,
M may be iron (Fe), lithium (Li), magnesium (Mg), manganese (Mn), cobalt (Co), nickel (Ni), copper (Cu), zinc (Zn), lead (Pb), palladium (Pd), TiO, VO, FeCl, FeO, BCI, AlCl, MnCl, GaCl, InCl, SiR₆₅R₆₆, or Ru(CO),
x may be 1, 2, or 3,
y may be 1 or 2,
R₁ to R₆₆ may each independently be the same or different, and may each independently be hydrogen (H), an alkyl group, an alkenyl group, COOH, R₆₇-COOH (R₆₇ is an alkylene group), a benzyl group, CHO, COCH₃, COOCH₃, CN, OH, OCH₃, NH₂, NHCH₃, NH₂CH₃, N(CH₃)₂, NO₂, SOsH, or a halogen.

Other embodiments of the present disclosure will be described in the detailed description.

A rechargeable lithium battery according to one or more embodiments may exhibit excellent or suitable swelling characteristic and safety.

### BRIEF DESCRIPTION OF THE DRAWINGS

The above and other aspects, features, and advantages of certain embodiments of the present disclosure will be more apparent from the following description taken in conjunction with the accompanying drawings.
FIG. 1 is a schematic view illustrating a rechargeable lithium battery according to one or more embodiments of the present disclosure.
FIG. 2 is a schematic view illustrating a rechargeable lithium battery according to one or more embodiments of the present disclosure.
FIG. 3 is a schematic view illustrating a rechargeable lithium battery according to one or more embodiments of the present disclosure.
FIG. 4 is a schematic view illustrating a rechargeable lithium battery according to still another embodiment.

### DETAILED DESCRIPTION

Hereinafter, example embodiments are described in more detail. However, these embodiments are mere example, the present disclosure is not limited thereto and the present disclosure is defined by the scope of claims and equivalents thereof.

As utilized herein, if (e.g., when) a definition is not otherwise provided, it will be understood that if (e.g., when) an element such as a layer, film, region, or substrate is referred to as being "on" another element, it may be directly on the other element or intervening elements may also be present. In contrast, when an element is referred to as being "directly on" another element, there are no intervening elements present

Unless otherwise specified in the disclosure, as used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure". Unless otherwise specified, the phrase "A and/or B" or "A or B" may indicate "includes A, includes B, or includes A and B." Further, the "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

As utilized herein, the term "combination thereof" may include a mixture, a laminate, a complex, a copolymer, an alloy, a blend, a reactant of constituents.

As utilized herein, if (e.g., when) a definition is not otherwise provided, a particle diameter/size may be an average particle diameter/size. Such a particle diameter/size indicates an average particle diameter/size (D50) where a cumulative volume is about 50 volume% in a particle size distribution. The average particle diameter/size (D50) may be measured by a method well suitable to those skilled in the art, for example, by a particle size analyzer, for example, HORIBA, LA-950 laser particle size analyzer, or by a transmission electron microscope (TEM), or a scanning electron microscope (SEM). In some embodiments, a dynamic light-scattering measurement device may be utilized to perform a data analysis, and the number of particles is counted for each particle size range, and from this, the average particle diameter/size (D50) value may be easily obtained through a calculation. In one or more embodiments, the particle size may be measured by a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of about 28 kHz at a power of about 60 W, and calculating an average particle diameter/size (D50) in the 50 % standard of particle distribution in the measuring device. In the present disclosure, when particles are spherical, "diameter" indicates an average particle diameter, and when the particles are non-spherical, the "diameter" indicates a major axis length.

According to one or more embodiments of the present disclosure, a rechargeable lithium battery may include: an electrode assembly; a battery case housing the electrode assembly; and a gas capturing layer between the electrode assembly and the battery case, wherein the gas capturing layer includes a compound represented by one selected from among Chemical Formula 1 to Chemical Formula 4.

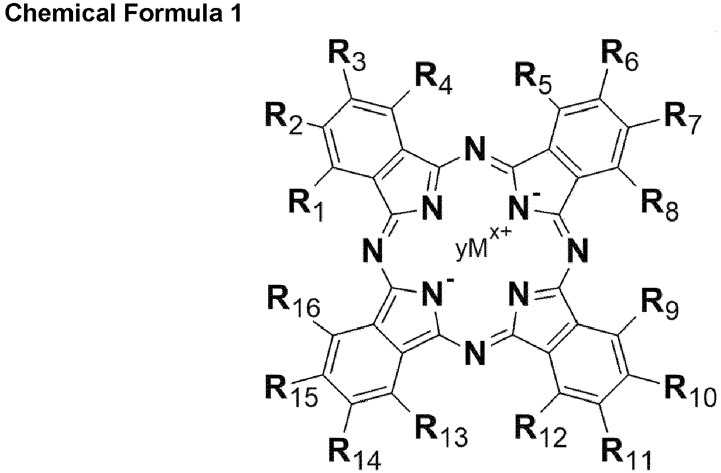

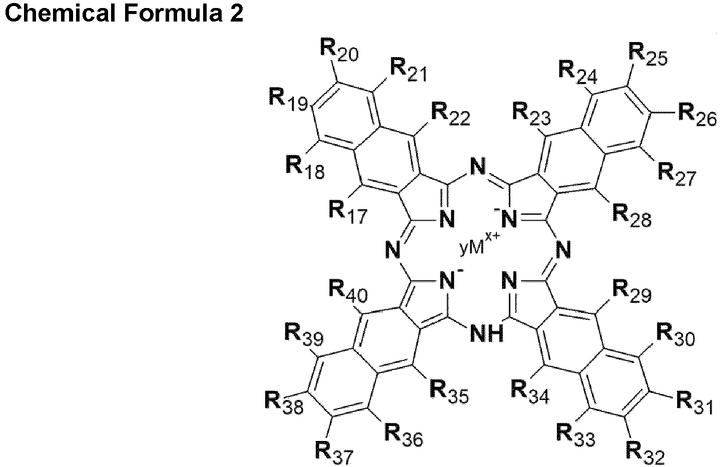

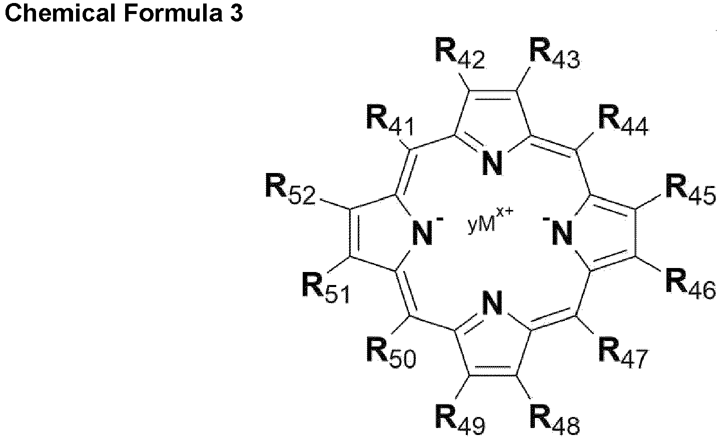

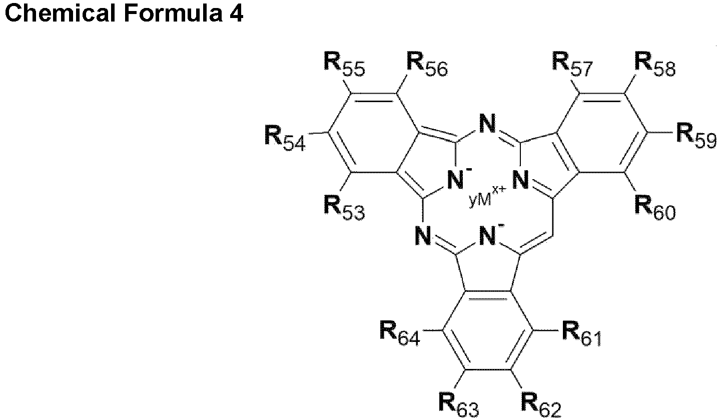

In Chemical Formula 1 to Chemical Formula 4,
M may be iron (Fe), lithium (Li), magnesium (Mg), manganese (Mn), cobalt (Co), nickel (Ni), copper (Cu), zinc (Zn), lead (Pb), palladium (Pd), TiO, VO, FeCl, FeO, BCI, AlCl, MnCl, GaCl, InCl, SiR₆₅R₆₆, or Ru(CO),
X may be 1, 2 or 3,
y may be 1 or 2,
R₁ to R₆₆ may each independently be the same or different, and may be H, an alkyl group, an alkenyl group, COOH, R₆₇-COOH (R₆₇ is an alkylene group), a benzyl group, CHO, COCH₃, COOCH₃, CN, OH, OCH₃, NH₂, NHCH₃, NH₂CH₃, N(CH₃)₂, NO₂, SOsH, or a halogen.

In one or more embodiments, the alkyl group may be a substituted or unsubstituted alkyl group, for example, a C1 to C10 alkyl group. The alkenyl group may be a substituted or unsubstituted alkenyl group, for example, a C2 to C20 alkenyl group. A functional group in the "substituted" (e.g., a substituent) may be, for example, a C1 to C10 hydrocarbon group, a hydroxy alkyl group, or an alkoxy alky group.

The halogen may be fluorine (F), chlorine (Cl), bromine (Br), or iodine (I).

In one or more embodiments, the compound may be a compound in which M is Fe, x is 2 or 3, and y is 1. For example, in some embodiments, the compound may be iron phthalocyanine, iron phthalocyanine chloride, iron hemoglobin, iron myoglobin, or a (e.g., any suitable) combination thereof.

Such a compound has a conjugation structure which may capture O₂ and/or CO₂ which may be generated during charging and discharging, so that the swelling caused by the generation of these gases may be effectively suppressed or reduced and the internal thermal runaway (e.g., combustion) of the battery may be inhibited or reduced, thereby preventing or reducing the explosion of the battery. This may improve the safety of the battery.

Non-limiting examples of the compound may be compounds represented by Chemical Formula 1a to Chemical Formula 1s.

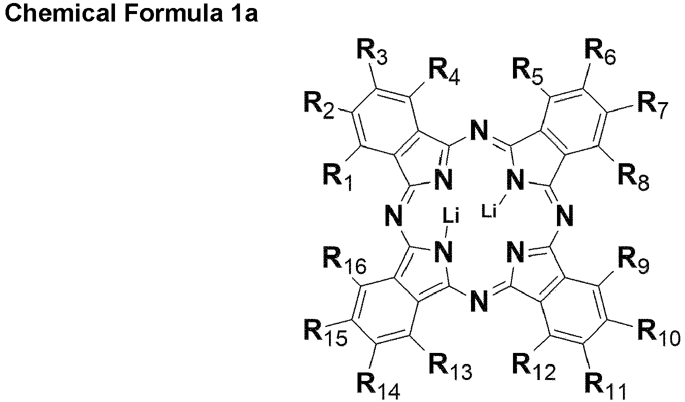

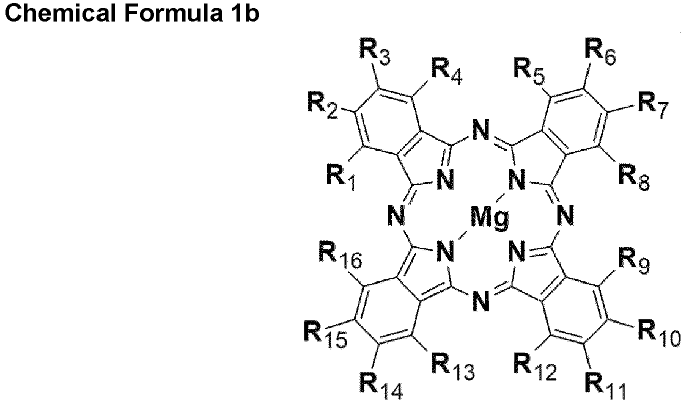

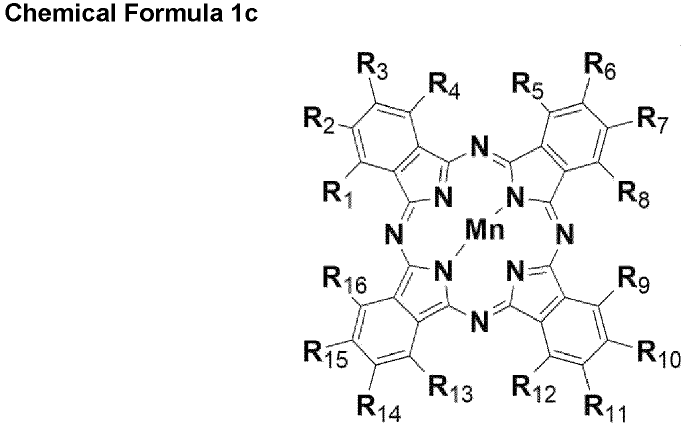

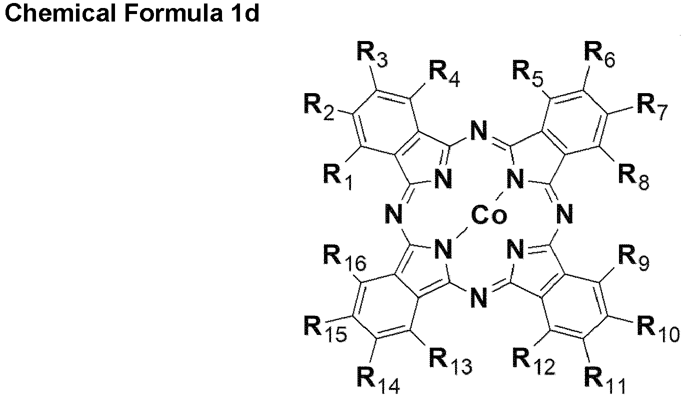

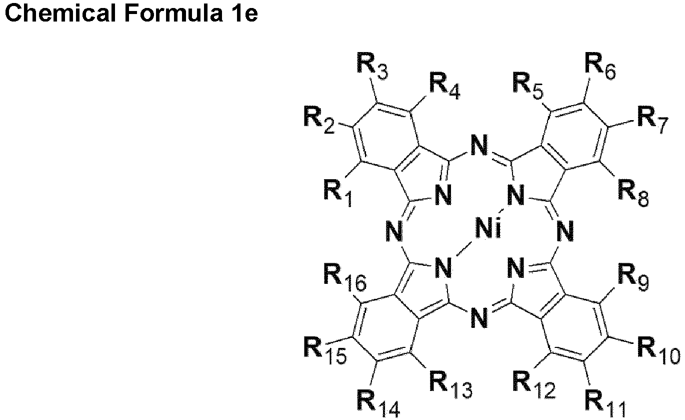

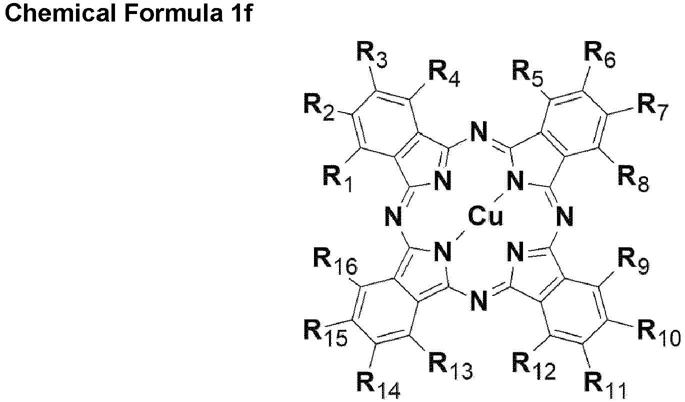

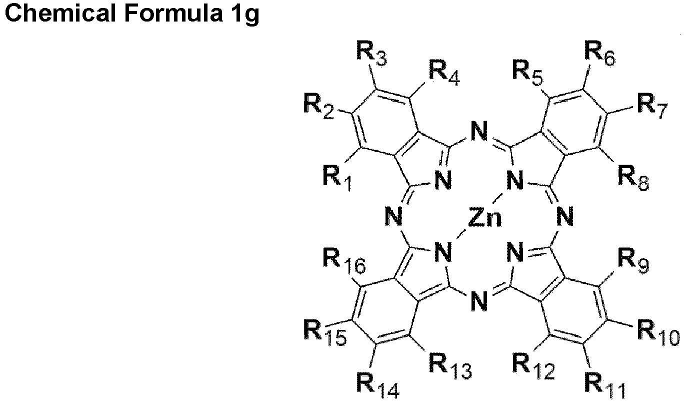

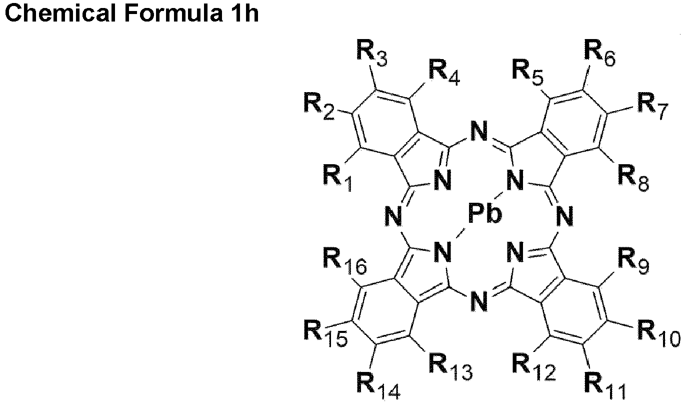

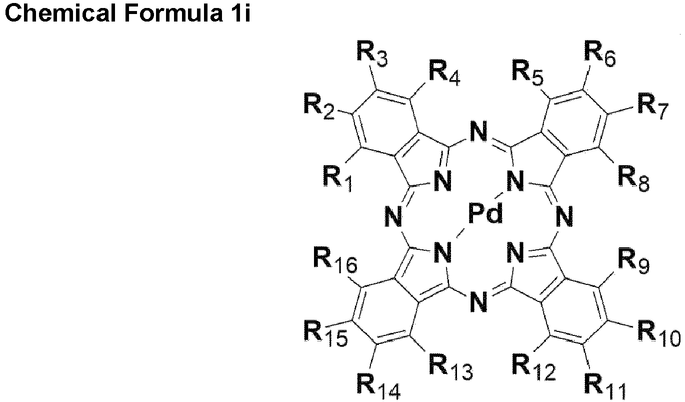

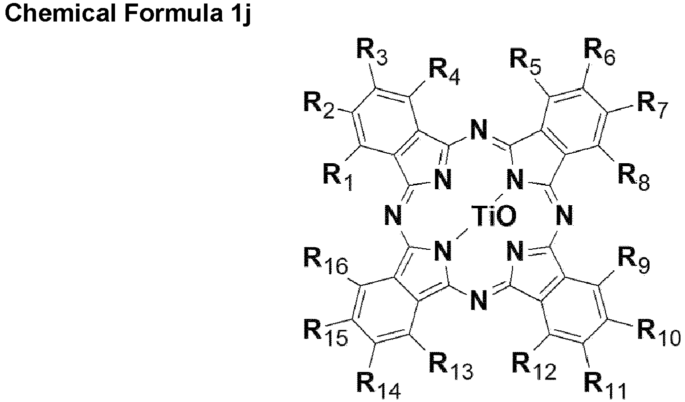

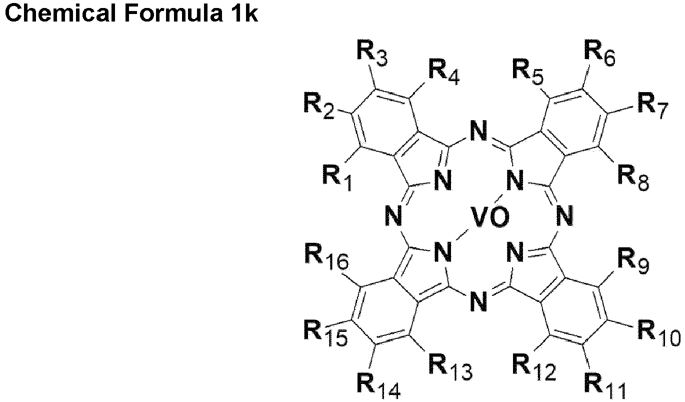

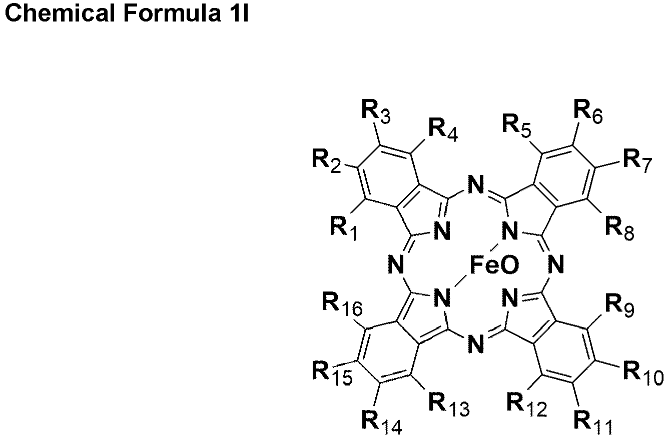

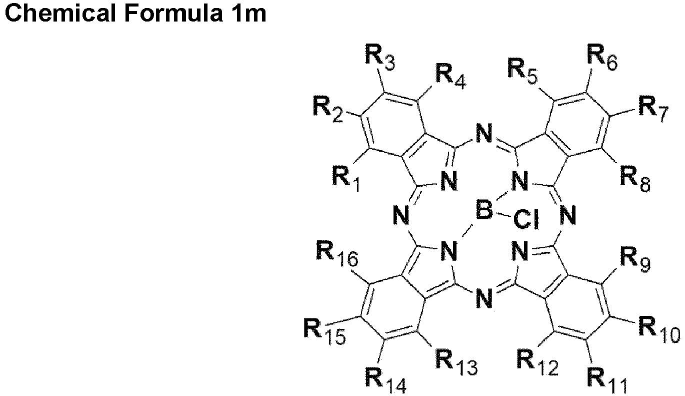

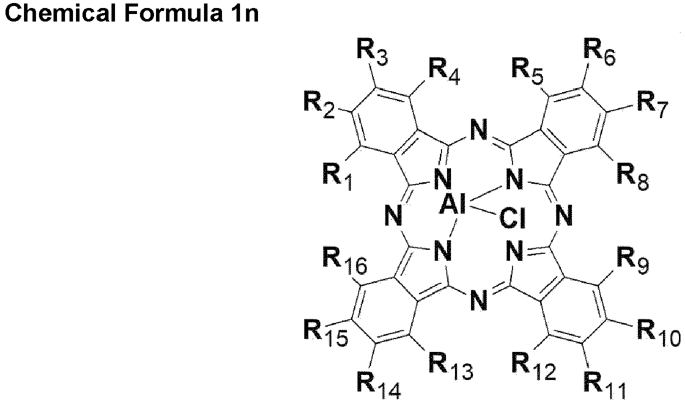

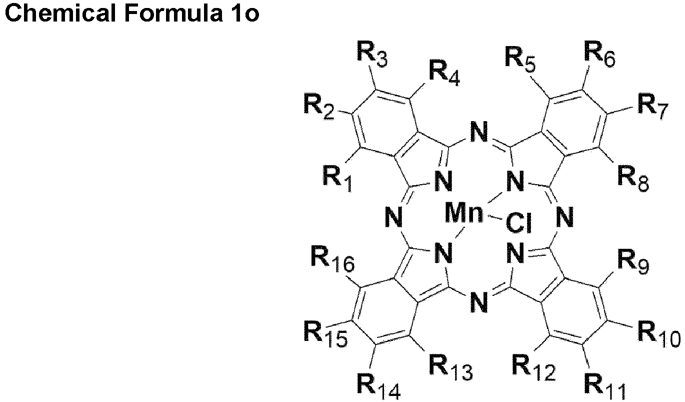

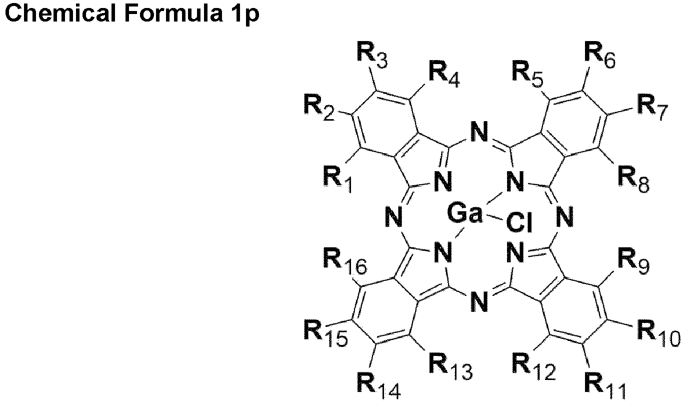

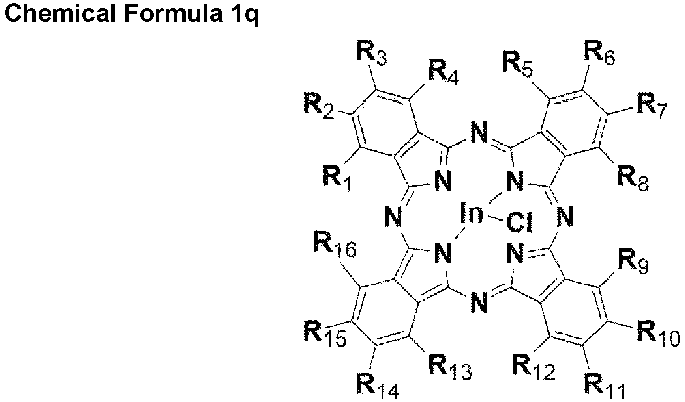

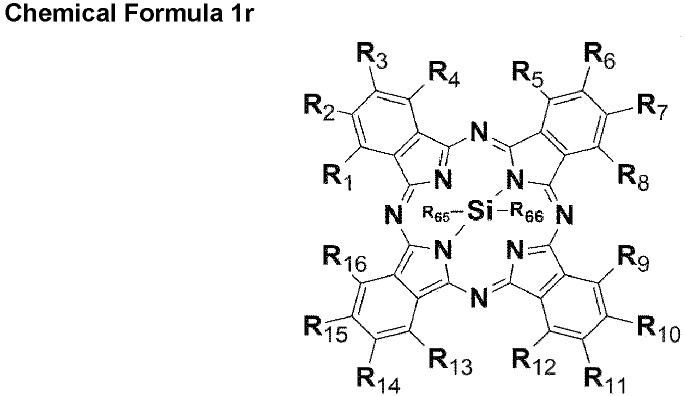

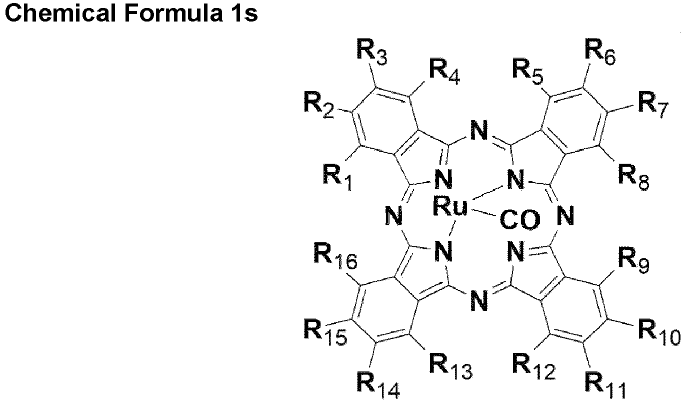

Among the compounds represented by Chemical Formula 1 according to one or more embodiments, a compound where M is Fe, x is 2, y is 1, and R₁ to R₁₆ are each hydrogen, may be represented by Chemical Formula 10a. In some embodiments, this compound may be represented by Chemical Formula 10b.

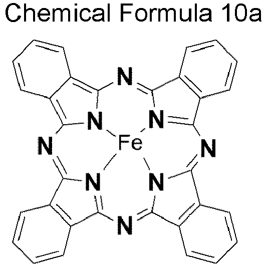

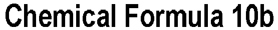

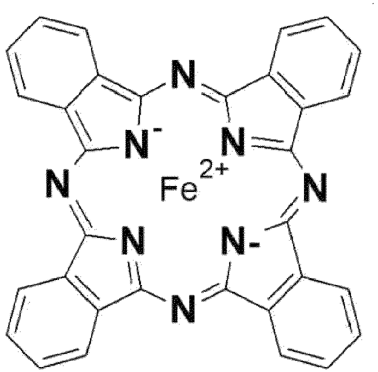

In one or more embodiments, as the example of the compounds represented by Chemical Formula 1, a compound where M is FeCl, x is 3, y is 1, and R₁ to R₁₆ are each hydrogen, may be represented by Chemical Formula 10c.

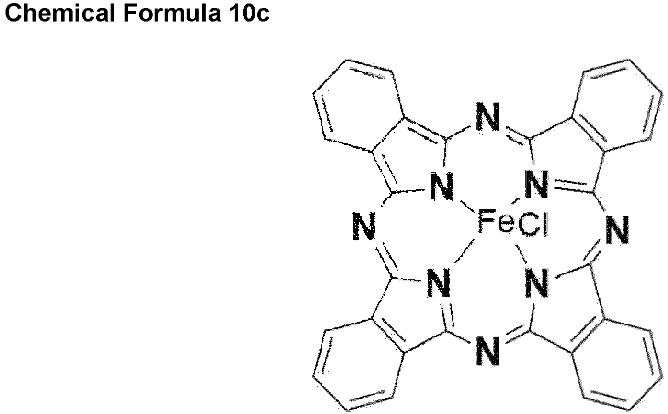

In one or more embodiments, the gas capturing layer represents a layer for capturing gases generated in the battery.

In one or more embodiments, a thickness of the gas capturing layer may be about 10 µm or more, about 10 µm to about 600 µm, or about 200 µm to about 400 µm. If the thickness of the gas capturing layer is about 100 µm or more, gas generated inside the battery, for example, O₂ and/or CO₂, may be more effectively captured. If the thickness of the gas capturing layer is at most 600 µm, the effects for capturing gas may approximately obtained, while maintaining the energy density of the battery.

An amount of the compound represented by one selected from among Chemical Formulas 1 to 4 may be, based on the total weight, 100 wt%, of the gas capturing layer, about 5 wt% to about 99 wt%, about 10 wt% to about 95 wt%, or about 30 wt% to about 95 wt%. If the amount of the compound represented by one selected from among Chemical Formulas 1 to 4 is within the range, the gas generated in the battery may be sufficiently captured, thereby more improving the safety effects.

In one or more embodiments, the gas capturing layer may include a binder. If the gas capturing layer includes the binder, an amount of the binder may be, based on the total weight, 100 wt%, of the gas capturing layer, about 1 wt% to about 95 wt%, about 5 wt% to about 90 wt%, or about 5 wt% to about 70 wt%. The binder may be polyvinylidene fluoride (e.g., polyvinylidene difluoride), polyvinylidene fluoride-hexafluoropropylene copolymer (PVdF-HFP, polyvinylidene-co-hexafluoropropylene), and/or a (e.g., any suitable) combination thereof.

In one or more embodiments, the gas capturing layer may be coated on the battery case and may be included in the battery. The rechargeable lithium battery according to one or more embodiments may further include an insulation tape around (e.g., surrounding) the electrode assembly, and the gas capturing layer may be coated on the insulation tape and may be included in the battery. For example, in some embodiments, the gas capturing layer may be coated on the insulation tape, so that the coated surface may be arranged in contact with the battery case, or the coated surface may be arranged in contact with the electrode assembly. For example, in one or more embodiments, the gas capturing layer may be arranged between the insulation tape and the battery case, or the gas capturing layer may be arranged between the electrode assembly and the insulation tape. The rechargeable lithium battery according to one or more embodiments may further include a finishing tape around (e.g., surrounding) the electrode assembly to fix the electrode assembly from loosening during insertion into the battery case, and the gas capturing layer may be coated on the finishing tape and may be included in the battery. If the rechargeable lithium battery includes both (e.g., simultaneously) insulation tape and finishing tape, the finishing tape may be arranged in contact with the battery case, and the gas capturing layer be arranged between the insulation tape and the finishing tape or may be arranged between the finishing tape and the battery case, or the gas capturing layer may also be arranged between electrode assembly and the insulation tape.

For example, the gas capturing layer may be formed by any procedures, as long as it may be formed between the electrode assembly and the battery case. However, if the gas capturing layer formation is directly performed on a separator of the electrode assembly, a short circuit may occur, so it is not appropriate or suitable to perform the formation directly on the separator.

Hereinafter, example procedures of the gas capturing layer formation will be briefly illustrated.

According to one or more embodiments of the present disclosure, a gas capturing compound (i.e., a compound represented by one selected from among Chemical Formula 1 to Chemical Formula 4) and a binder are mixed in a solvent to prepare a gas capturing layer composition. The binder may be polyvinylidene fluoride (e.g., polyvinylidene difluoride), polyvinylidene fluoride-hexafluoropropylene copolymer (PVdF-HFP, polyvinylidene-co-hexafluoropropylene), and/or a (e.g., any suitable) combination thereof. The solvent may be an organic solvent such as N-methyl pyrrolidone, and/or the like. A mixing ratio of the gas capturing compound and the binder may be a weight ratio of about 5:95 to about 10:90, a weight ratio of about 50:50 to about 80:20, or a weight ratio of about or 90:10 to about 99:1. If the mixing ratio of the gas capturing compound to the binder is within the range, there may be advantages for bonding to the outer cans (e.g., battery cases).

The gas capturing layer composition may be coated on a coating target and dried to prepare a gas capturing layer. The drying may be carried out at about 60 °C to about 140 °C, or about 80 °C to about 120 °C.

According to one or more embodiments, another method of preparing the gas capturing layer may include adding a binder to a solvent (e.g., a first solvent) to prepare a binder liquid, adding a gas capturing compound liquid (e.g., prepared by dissolving the gas capturing compound in a second solvent) to the binder liquid to prepare a gas capturing layer composition, coating the gas capturing layer composition on a coating target and drying. The drying may be carried out at about 60 °C to about 140 °C, or about 80 °C to about 120 °C.

The coating of the gas capturing layer composition may be carried out by a spray-jetting, a jetting utilizing a slot die, or a dip coating.

According to one or more embodiments, still another method for preparing the gas capturing layer may include coating a binder liquid on the battery case to prepare a binder layer, coating a gas capturing compound liquid on the binder layer and drying. The binder liquid may be prepared by adding a binder to a first solvent, and the gas capturing compound liquid may be prepared by adding the gas capturing compound to a second solvent. The binder, the first solvent, and the second solvent may be the same as the aforementioned binder and solvent, and the first solvent and the second solvent may be identical to or different therefrom. The coating and the drying may be performed by substantially the same procedures as described herein.

According to one or more embodiments, the gas capturing layer may be prepared by attaching a double-sided tape on a coating target and then attaching the gas capturing compound thereon. The double-sided adhesive tape may be any double-sided tape and it may attach a gas capturing material (e.g., the gas capturing compound) to the battery case, which is an external material, for example, a can or a pouch, without a binder solution.

In one or more embodiments, the battery case may be any case utilized in the battery, such as a metal can, a metal laminate sheet, a metal pouch, and/or the like. The metal may be aluminum, a nickel alloy, but embodiments of the present disclosure are not limited thereto. The nickel alloy may be an alloy of nickel and M (where M is copper (Cu), iron (Fe), Chromium (Cr), titanium (Ti), molybdenum (Mo), niobium (Nb), aluminum (Al), manganese (Mn), silicon (Si), tungsten (W), cobalt (Co), carbon (C)(non-metal), and/or a (e.g., any suitable) combination thereof). For example, the nickel alloy may be Ni-Cu, Ni-Fe, Ni-Cr, Ni-Ti, Ni-Mo, Ni-Nb, Ni-Al, Ni-Mn, Ni-Si, Ni-W, Ni-Co, Ni-C, Ni-Cr-Fe, Ni-Cr-Mo, Ni-Cr-Co, or Ni-Cr-Fe-Mo.

In one or more embodiments, the rechargeable lithium battery may be a pouch battery, a can battery, or a combination thereof. In some embodiments, the can battery may refer to a battery of which the battery case is a can-type or kind, and may be a cylindrical battery or a prismatic battery.

### Electrode assembly

The electrode assembly according to one or more embodiments may include a positive electrode, a separator, and a negative electrode.

### Positive electrode

In one or more embodiments, the positive electrode may include a positive electrode current collector and a positive electrode active material layer on the positive electrode current collector. The positive electrode active material layer may include a positive electrode active material and may further include a binder and/or a conductive material.

An amount of the positive electrode active material may be about 90 wt% to about 99.5 wt% based on a total weight, 100 wt%, of the positive electrode active material layer, and each amount of the binder and the conductive material may be about 0.5 wt% to about 5 wt% based on the total weight, 100 wt%, of the positive electrode active material layer.

For example, in some embodiments, the positive electrode may further include an additive that may serve as a sacrificial positive electrode.

The positive electrode active material may include lithiated intercalation compounds that reversibly intercalate and deintercalate lithium ions. In some embodiments, at least one selected from among composite oxides of lithium and a metal of (e.g., selected from among) cobalt, manganese, nickel, and/or a (e.g., any suitable) combination thereof may be utilized.

The composite oxide may be a lithium transition metal composite oxide, and non-limiting examples thereof may include lithium nickel-based oxides, lithium cobalt-based oxides, lithium manganese-based oxides, lithium iron phosphate-based compounds, cobalt-free nickel-manganese-based oxides, and/or (e.g., any suitable) combinations thereof.

In one or more embodiments, one or more of the compounds represented by any one of the following chemical formulas may be utilized: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A may be Ni, Co, Mn, and/or a (e.g., any suitable) combination thereof; X may be Al, Ni, Co, Mn, Cr, Fe, Mg, Sr, V, a rare earth element, and/or a (e.g., any suitable) combination thereof; D may be O, F, S, P, and/or a (e.g., any suitable) combination thereof; G may be Al, Cr, Mn, Fe, Mg, La, Ce, Sr, V, and/or a (e.g., any suitable) combination thereof; and L¹ may be Mn, Al, and/or a (e.g., any suitable) combination thereof.

For example, in one or more embodiments, the positive electrode active material may be a high nickel-based positive electrode active material having a nickel amount of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on a total mole, 100 mol%, of the metals excluding lithium in the lithium transition metal composite oxide. The high-nickel-based positive electrode active material may realize high capacity and may be applied to a high-capacity, high-density rechargeable lithium battery.

The binder improves binding properties of positive electrode active material particles with one another and with the positive electrode current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, a (meth)acrylated styrene butadiene rubber, an epoxy resin, a (meth)acrylic resin, a polyester resin, nylon, and/or the like, but embodiments of the present disclosure are not limited thereto.

The conductive material may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, Ketjen black, carbon fiber, carbon nanofiber, carbon nanotube, and/or the like; a metal-based material of a metal powder or a metal fiber including copper, nickel, aluminum, silver, and/or the like; a conductive polymer such as a polyphenylene derivative; or a mixture thereof.

The positive electrode current collector may include Al, but embodiments of the present disclosure are not limited thereto.

### Negative electrode

The negative electrode may include a negative electrode current collector, and a negative electrode active material layer on the negative electrode current collector. The negative electrode active material layer may include a negative electrode active material and may further include a binder and/or a conductive material.

For example, in one or more embodiments, the negative electrode active material layer may include the negative electrode active material at about 90 wt% to about 99 wt% and the binder at about 1 wt% to about 10 wt%, or may include the negative electrode active material at about 90 wt% to about 99 wt%, the binder at about 0.5 wt% to about 5 wt%, and the conductive material at about 0.5 wt% to about 5 wt%.

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example. crystalline carbon, amorphous carbon, and/or a (e.g., any suitable) combination thereof. The crystalline carbon may be graphite such as unspecified-shaped (e.g., irregularly shaped), sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal of (e.g., selected from among) sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, SnO₂, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, in some embodiments, the silicon-carbon composite may include a secondary particle (core) where primary silicon particles are agglomerated, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon particle may be silicon nano particles. In one or more embodiments, an average particle diameter of the silicon nano particle may be about 10 nm to about 1,000 nm, for example, in some embodiments, the average particle diameter of the silicon nano particle may be about 20 nm to about 900 nm, about 20 nm to about 800 nm, about 20 nm to about 500 nm, about 20 nm to about 300 nm, or about 20 nm to about 150 nm. If the average particle diameter of the silicon nano particles is within the range, the extreme volume expansion caused during charge and discharge may be suppressed or reduced, and a breakage of the conductive path due to crushing of particles may be prevented or reduced.

The silicon-carbon composite may further include crystalline carbon. For example, in one or more embodiments, the silicon-carbon composite may include a core including crystalline carbon and silicon particles and an amorphous carbon coating layer on a surface of the core.

If (e.g., when) the silicon-carbon composite includes the silicon particles, crystalline carbon, and amorphous carbon, an amount of the amorphous carbon may be about 30 wt% to about 70 wt% based on the total weight, 100 wt%, of the silicon-carbon composite, and an amount of the crystalline carbon may be about 1 wt% to about 20 wt% based on the total weight, 100 wt%, of the silicon-carbon composite. An amount of the silicon particles may be, based on the total weight, 100 wt%, of the silicon-carbon composite, about 20 wt% to about 69 wt%, or according to one or more embodiments, may be about 30 wt% to about 60 wt%.

In one or more embodiments, the Si-based negative electrode active material or the Sn-based negative electrode active material may be utilized together with a carbon-based negative electrode active material.

In some embodiments, the silicon-carbon composite may be included as a first negative electrode active material and crystalline carbon may be included as a second negative electrode active material. A mixing ratio of the first negative electrode active material and the second negative electrode active material may be about 1:99 to about 99:1 by weight ratio. In some embodiments, the negative electrode active material may include the first negative electrode active material and the second negative electrode active material at a weight ratio of about 1:99 to about 50:50, or a weight ratio of about 5:95 to about 20:80.

The particle diameter of the Si-C composite may be appropriately controlled or selected, and embodiments of the present disclosure are not limited thereto.

The binder improves binding properties of negative electrode active material particles with one another and with the negative electrode current collector. The binder may be a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and/or a (e.g., any suitable) combination thereof.

As the binder of the negative electrode, a cellulose-based compound may be utilized. In some embodiments, as the binder of the negative electrode, the aqueous binder may be utilized together with the cellulose-based compound. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may impart viscosity to refer as a thickener and may serve as a binder to refer as a binder. An amount of the cellulose-based compound may be appropriately and/ suitably adjusted, and embodiments of the present disclosure are not limited thereto.

The dry binder may be a polymer material that is capable of being fibrous. For example, the dry binder may be polytetrafluoroethylene, polyvinylidene fluoride, a polyvinylidene fluoride-hexafluoropropylene copolymer, polyethyleneoxide, and/or a (e.g., any suitable) combination thereof.

In one or more embodiments, the conductive material may be included to provide electrode conductivity, and any electrically conductive material may be utilized as a conductive material unless it causes a chemical change. Non-limiting examples of the conductive material may be a carbon-based material such as natural graphite, artificial graphite, carbon black, acetylene black, Ketjen black, a carbon fiber, a carbon nanofiber, carbon nanotube, and/or the like; a metal-based material of a metal powder or a metal fiber including copper, nickel, aluminum, silver, and/or the like; a conductive polymer such as a polyphenylene derivative; or a mixture thereof.

The negative electrode current collector may include one of (e.g., selected from among) a copper foil, a nickel foil, a stainless steel foil, a titanium foil, a nickel foam, a copper foam, a polymer substrate coated with a conductive metal, and/or a (e.g., any suitable) combination thereof, but embodiments of the present disclosure are not limited thereto.

### Electrolyte

An electrolyte may include a non-aqueous organic solvent and a lithium salt.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like, and the aprotic solvent may include: nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes; and/or the like.

The non-aqueous organic solvents may be utilized alone or in combination of two or more.

If utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Non-limiting examples of the lithium salt may include at least one of (e.g., at least one selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), wherein x and y are integers of about 1 to about 20, lithium trifluoromethane sulfonate, lithium tetrafluoroethane sulfonate, lithium difluorobis(oxalato)phosphate (LiDFBOP), or lithium bis(oxalato)borate (LiBOB).

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (e.g., any suitable) combination thereof on one or both (e.g., simultaneously) surfaces (e.g., opposite surfaces) of the porous substrate.

The porous substrate may be a polymer film formed of any one selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer thereof, or a mixture of two or more thereof.

The organic material may include a polyvinylidene fluoride-based polymer and/or a (meth)acrylic polymer.

The inorganic material may include inorganic particles of (e.g., selected from among) Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but embodiments of the present disclosure are not limited thereto.

The organic material and the inorganic material may be mixed in one coating layer, or a coating layer including an organic material and a coating layer including an inorganic material may be stacked.

### Insulation tape

The rechargeable lithium battery according to one or more embodiments may further include an insulation tape. In some embodiments, the insulation tape may at least partially surround the electrode assembly where the positive electrode, the separator, and the negative electrode are stacked, and may be included in the rechargeable lithium battery, or the insulation tape may completely surround the electrode assembly and may also be included in the rechargeable lithium battery.

In one or more embodiments, the gas capturing layer may be presented between the insulation tape and the battery case and this may enable to further improve the battery safety.

The insulation tape may totally surround the electrode assembly, and if (e.g., when) the gas capturing layer according to one or more embodiments may be presented on the insulation tape to insert the electrode assembly into the battery case, the gas capturing layer may be presented between the insulation tape and the battery case, or between the insulation tape and the electrode assembly.

The insulation tape may be prepared from a polymer having insulating properties which is capable of preventing or reducing a short circuit of the battery, and the type or kind of the polymer is not limited, but may be, for example, polyethylene terephthalate, polyimide, and/or a (e.g., any suitable) combination thereof.

### Finishing tape

The rechargeable lithium battery according to some embodiments may further include a finishing tape partially surround the electrode assembly. The finishing tape serves to fix the electrode assembly to prevent the electrode assembly from coming loose during the inserting the electrode assembly into the battery case.

The finishing tape may be polypyrrolidone, polyethylene terephthalate, polystyrene, oriented polystyrene (OPS), and/or a (e.g., any suitable) combination thereof.

In one or more embodiments, the gas capturing layer may be coated on the finishing tape, and for example, in some embodiments, the gas capturing layer may be arranged between the finishing tape and the battery case. In some embodiments, if the rechargeable lithium battery includes both (e.g., simultaneously) the insulation tape and the finishing tape, the finishing tape may be arranged to contact with the battery case, the gas capturing layer may be arranged between the insulation tape and the finishing tape, or may be arranged between the finishing tape and the battery case, or the gas capturing layer may be arranged between the electrode assembly and the insulation tape.

The rechargeable lithium battery may be classified into a lithium ion battery, a lithium ion polymer battery, or a lithium polymer battery depending on the types (kinds) of the separator and the electrolyte, may be classified into cylindrical, prismatic, coin-type or kind, or pouch-type or kind depending on the shape of the rechargeable lithium battery, and/or may be classified into a bulk type or kind or a thin film type or kind depending on a size of the rechargeable lithium battery. The structure and fabrication of such batteries are well-suitable in the related arts, and thus, are not described in further detail.

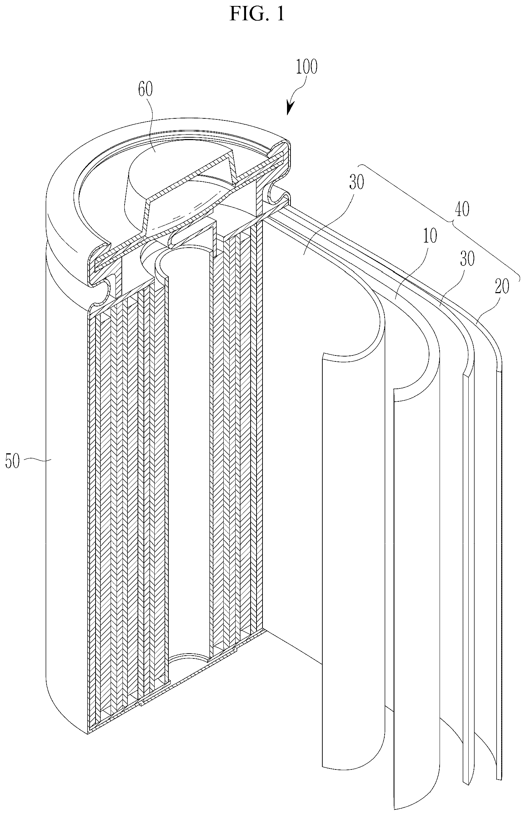

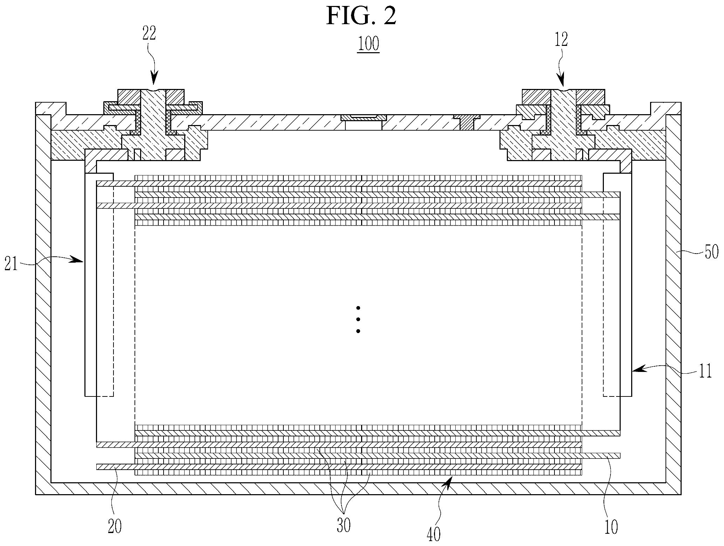

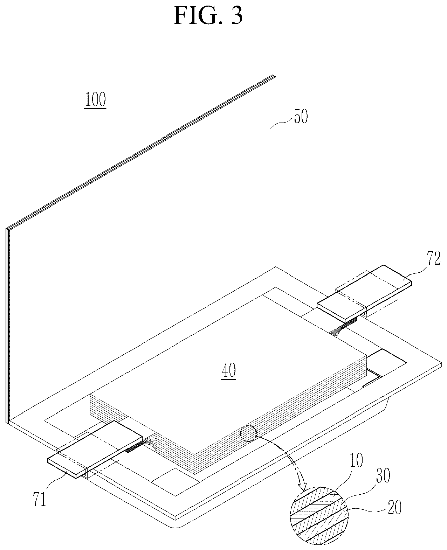

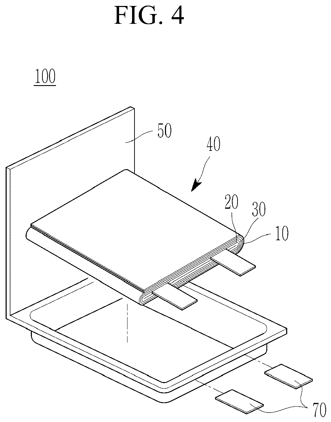

The rechargeable lithium battery may be classified into cylindrical, prismatic, pouch, or coin-type or kind batteries, and/or the like depending on a shape thereof. FIGs. 1 to 4 are each a schematic view illustrating a rechargeable lithium battery according to one or more embodiments. FIG. 1 shows a cylindrical battery, FIG. 2 shows a prismatic battery, and FIG 3 and FIG. 4 each show a pouch-type or kind battery. Referring to FIGs. 1 to 4, a rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution . The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIG. 3 and FIG. 4, the rechargeable lithium battery 100 may include an electrode tab 70, which may be, for example, a positive electrode tab 71, or a negative electrode tab 72, serving as an electrical path for inducing the current formed in the electrode assembly 40 to the outside.

Hereinafter, examples of the present disclosure and comparative examples are described. These examples, however, are not in any sense to be interpreted as limiting the scope of the present disclosure.

### Example 1

98 wt% of an artificial graphite negative electrode active material, 1 wt% of a styrene-butadiene rubber, and 1 wt% of carboxymethyl cellulose were mixed in a water solvent to prepare a negative electrode active material layer slurry.

The negative electrode active material layer slurry was coated on a Cu current collector, dried, and pressurized to prepare a negative electrode under a general technique in the art.

96 wt% of a LiNi_{0.8}Co_{0.1}Al_{0.1}O₂ positive electrode active material, 2 wt% of polyvinylidene fluoride, and 2 wt% of Ketjen black were mixed in an N-methyl pyrrolidone solvent to prepare a positive electrode active material layer slurry.

The positive electrode active material layer slurry was coated on an Al current collector, dried and pressurized to prepare a positive electrode utilizing a general technique in the art.

A polyethylene/polypropylene double-layered separator was prepared.

An electrode assembly of the negative electrode, the separator, and the positive electrode was prepared.

95 wt% of iron(II) phthalocyanine represented by Chemical Formula 10b and 5 wt% of a polyvinylidene fluoride binder were distributed in an N-methyl pyrrolidone solvent to prepare a gas capturing layer composition.

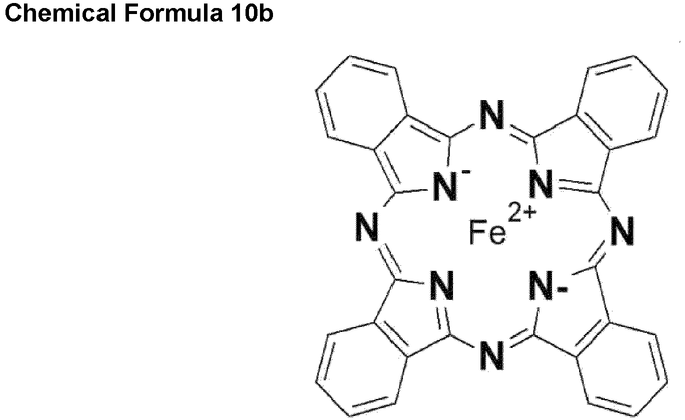

The gas capturing layer composition was spray-jetted onto an aluminum metal can battery case for a prismatic cell to provide a 200 µm thick gas capturing layer in the aluminum metal can battery case.

Thereafter, the electrode assembly was inserted into the aluminum metal can battery case and an electrolyte was injected thereto, fabricating a 150 Ah prismatic cell.

The electrolyte was prepared by dissolving 1.5 M LiPF₆ in ethylene carbonate, ethylmethyl carbonate, and dimethyl carbonate (20:20:40 volume ratio).

### Example 2

A 150 Ah prismatic cell was fabricated by substantially the same procedure as in Example 1, except that iron(III) phthalocyanine chloride represented by Chemical Formula 10c was utilized to prepare a gas capturing layer composition, instead of iron(II) phthalocyanine.

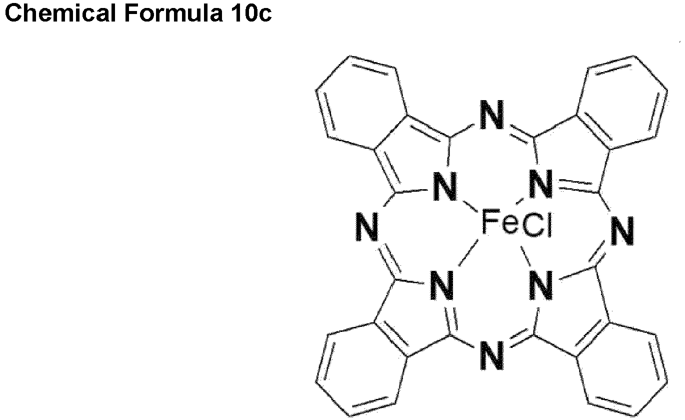

### Example 3

A 150 Ah prismatic cell was fabricated by substantially the same procedure as in Example 1, except that iron(II) hemoglobin represented by Chemical Formula 30a was utilized to prepare a gas capturing layer composition, instead of iron(II) phthalocyanine.

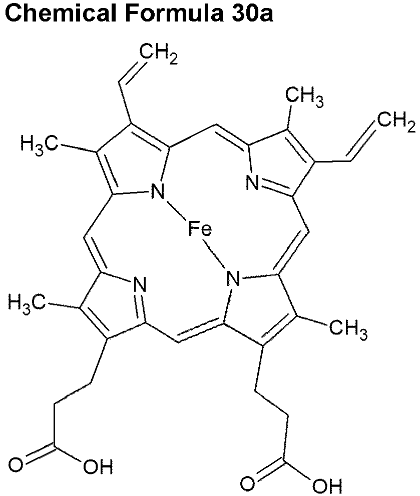

### Example 4

A 150 Ah prismatic cell was fabricated by substantially the same procedure as in Example 1, except that iron(II) myoglobin represented by Chemical Formula 30b was utilized to prepare a gas capturing layer composition, instead of iron(II) phthalocyanine.

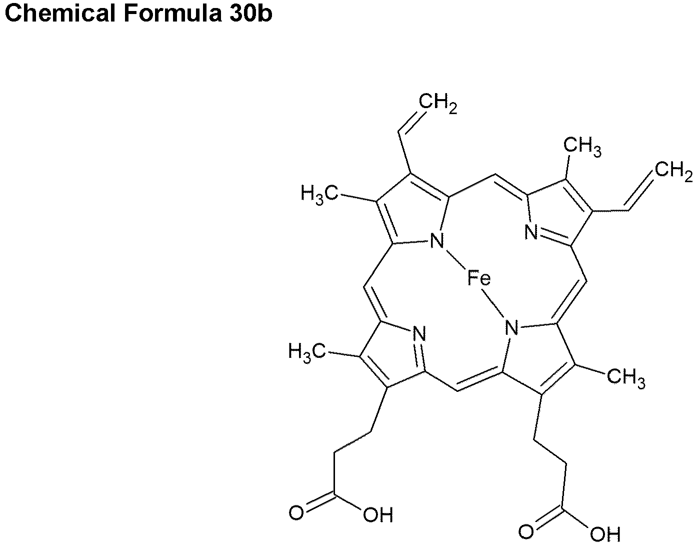

### Example 5

A 5 Ah cylindrical cell was fabricated by substantially the same procedure as in Example 1, except that an aluminum metal can battery case for a cylindrical cell was utilized as a battery case.

### Example 6

A 5 Ah cylindrical cell was fabricated by substantially the same procedure as in Example 2, except that an aluminum metal can battery case for a cylindrical cell was utilized as a battery case.

### Example 7

A 5 Ah cylindrical cell was fabricated by substantially the same procedure as in Example 3, except that an aluminum metal can battery case for a cylindrical cell was utilized as a battery case.

### Example 8

A 5 Ah cylindrical cell was fabricated by substantially the same procedure as in Example 4, except that an aluminum metal can battery case for a cylindrical cell was utilized as a battery case.

### Example 9

A 4.5 Ah pouch cell was fabricated by substantially the same procedure as in Example 1, except that an aluminum metal laminate sheet battery case for a pouch cell was utilized as a battery case.

### Example 10

A 4.5 Ah pouch cell was fabricated by substantially the same procedure as in Example 2, except that an aluminum metal laminate sheet battery case for a pouch cell was utilized as a battery case.

### Example 11

A 4.5 Ah pouch cell was fabricated by substantially the same procedure as in Example 3, except that an aluminum metal laminate sheet battery case for a pouch cell was utilized as a battery case.

### Example 12

A 4.5 Ah pouch cell was fabricated by substantially the same procedure as in Example 4, except that an aluminum metal laminate sheet battery case for a pouch cell was utilized as a battery case.

### Comparative Example 1

98 wt% of an artificial graphite negative electrode active material, 1 wt% of a styrene-butadiene rubber, and 1 wt% of carboxymethyl cellulose were mixed in a water solvent to prepare a negative electrode active material layer slurry.
The negative electrode active material layer slurry was coated on a Cu current collector, dried, and pressurized to prepare a negative electrode utilizing a general technique in the art.

96 wt% of a LiNi_{0.8}Co_{0.1}Al_{0.1}O₂ positive electrode active material, 2 wt% of polyvinylidene fluoride, and 2 wt% of Ketjen black were mixed in an N-methyl pyrrolidone solvent to prepare a positive electrode active material layer slurry.

The positive electrode active material layer slurry was coated on an Al current collector, dried and pressurized to prepare a positive electrode utilizing a general technique in the art.

A polyethylene/polypropylene double-layered separator was prepared.

An electrode assembly of the negative electrode, the separator, and the positive electrode was prepared.

The electrode assembly was inserted to an aluminum metal can battery case for a prismatic battery, and an electrolyte was injected thereto, to fabricate a 150 Ah prismatic cell. The electrolyte was prepared by dissolving 1.5 M LiPF₆ in ethylene carbonate, ethylmethyl carbonate, and dimethyl carbonate (20:20:40 volume ratio).

### Comparative Example 2

A 5 Ah cylindrical cell was fabricated by substantially the same procedure as in Comparative Example 1, except that the electrode assembly was inserted into an aluminum metal can battery case for a cylindrical cell.

### Comparative Example 3

A 4.5 Ah pouch cell was fabricated by substantially the same procedure as in Comparative Example 1, except that the electrode assembly was inserted into an aluminum metal laminate sheet battery case for a pouch cell.

### Experimental Example 1) Evaluation of gas partial pressure

The cells according to Examples 1 to 12 and Comparative Examples 1 to 3 were each exposed to 140 °C for 1 hour, and then, a CO₂ gas generating amount was measured by utilizing an electrochemical mass analysis (a differential Electrochemical Mass Spectroscopy, DEMS). From the measurement, a result (e.g., a value) of CO₂ maximum partial pressure/10⁻⁸ mbar was obtained. The results are shown in Table 1.

The cells according to Examples 1 to 12 and Comparative Examples 1 to 3 were each overcharged at 1 C to 6 V for 5 hours, and then the amount of O₂ gas generated was each measured. From the measurement, a result (e.g., a value) of O₂ maximum partial pressure/10⁻⁸ mbar was obtained. The results are shown in Table 1.

**Table 1**

| | CO₂ maximum partial pressure/10⁻⁸ mbar | O₂ maximum partial pressure/10⁻⁸ mbar |
|---|---|---|
| Comparative Example 1 | 8.79 | 3.24 |
| Comparative Example 2 | 3.29 | 1.31 |
| Comparative Example 3 | 4.27 | 0.96 |
| Example 1 | 0.88 | 0.46 |
| Example 2 | 0.73 | 0.51 |
| Example 3 | 1.25 | 0.69 |
| Example 4 | 1.32 | 0.59 |
| Example 5 | 0.59 | 0.21 |
| Example 6 | 0.61 | 0.27 |
| Example 7 | 0.81 | 0.34 |
| Example 8 | 0.87 | 0.39 |
| Example 9 | 0.96 | 0.33 |
| Example 10 | 0.99 | 0.37 |
| Example 11 | 1.18 | 0.46 |
| Example 12 | 1.06 | 0.45 |

As shown in Table 1, each of the cells of Examples 1 to 12 in which the gas capturing layer was formed between the electrode assembly and the battery case, exhibited surprisingly reduced gas generating amount during high temperature exposure compared to Comparative Examples 1 to 3 each without the gas capturing layer.

In the present disclosure, the term "comprise(s)/comprising", "include(s)/including", or "have(has)/having" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In present disclosure, "not include a or any 'component'," "exclude a or any 'component'", "'component'-free", and/or the like refers to that the "component" not being added, selected, or utilized as a component in a composition, but the "component" of less than a suitable amount may still be included due to other impurities and/or external factors.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the spirit and scope of the appended claims and equivalents thereof. Therefore, the aforementioned embodiments should be understood to be examples and not limiting the present disclosure in any way.

## Claims

1. A rechargeable lithium battery (100), comprising:
an electrode assembly (40);
a battery case (50) housing the electrode assembly (40); and
a gas capturing layer between the electrode assembly (40) and the battery case (50),
wherein the gas capturing layer comprises a compound represented by one selected from among Chemical Formula 1 to Chemical Formula 4: 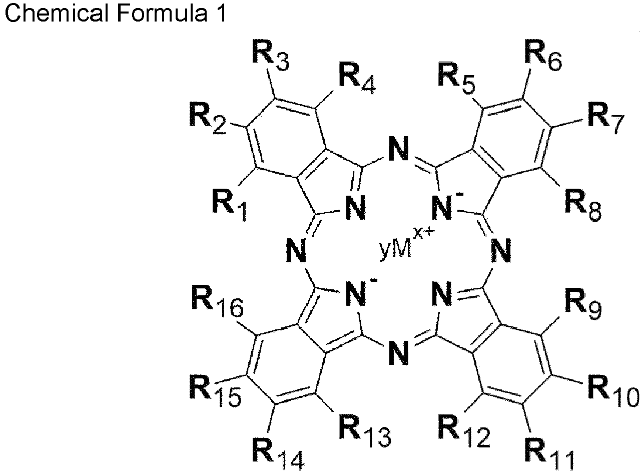 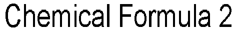 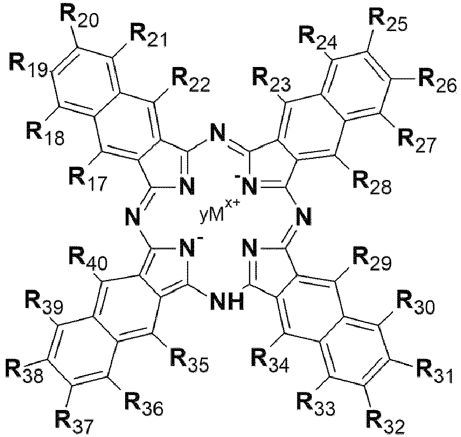 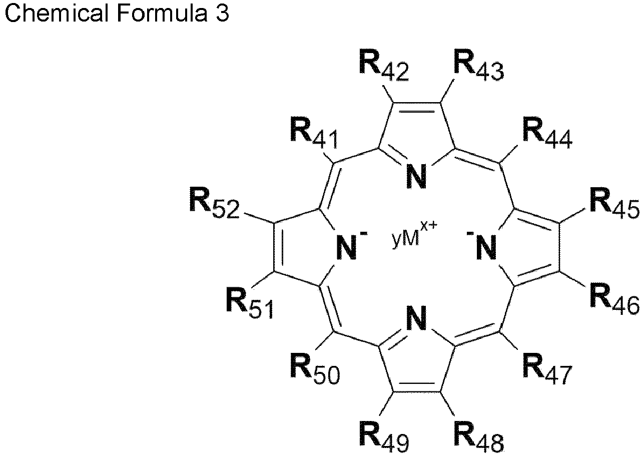 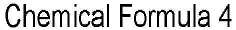 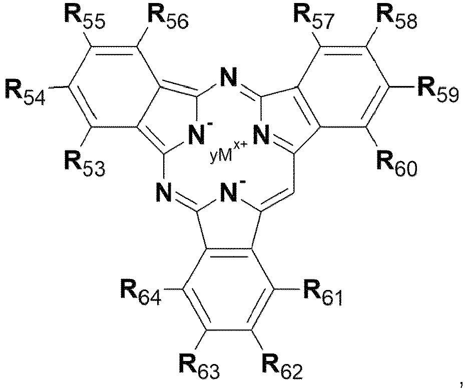
in Chemical Formula 1 to Chemical Formula 4,
M being Fe, Li, Mg, Mn, Co, Ni, Cu, Zn, Pb, Pd, TiO, VO, FeCl, FeO, BCl, AlCl, MnCl, GaCl, InCl, SiR₆₅R₆₆, or Ru(CO),
X being 1, 2, or 3,
y being 1 or 2, and
R₁ to R₆₆ being the same or different, and being each independently H, an alkyl group, an alkenyl group, COOH, R₆₇-COOH (R₆₇ is an alkylene group), a benzyl group, CHO, COCH₃, COOCH₃, CN, OH, OCH₃, NH₂, NHCH₃, NH₂CH₃, N(CH₃)₂, NO₂, SOsH, or a halogen.

2. The rechargeable lithium battery (100) as claimed in claim 1, wherein the compound is represented by one selected from among Chemical Formula 1a to Chemical Formula 1s:

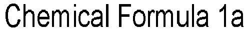

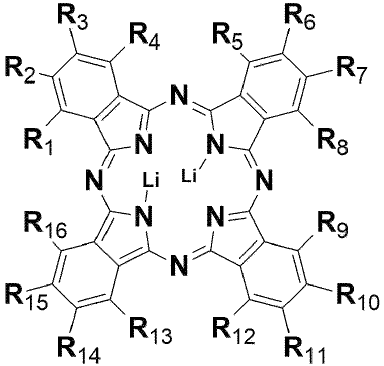

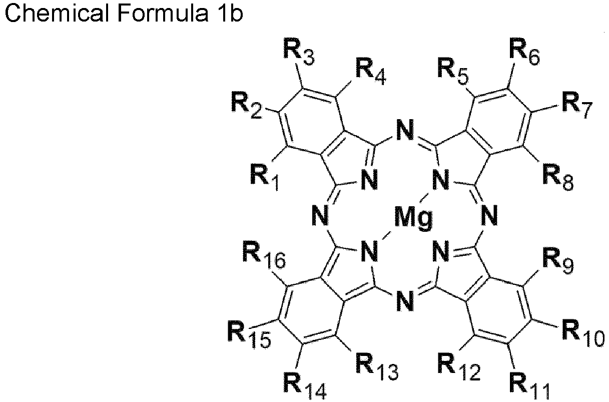

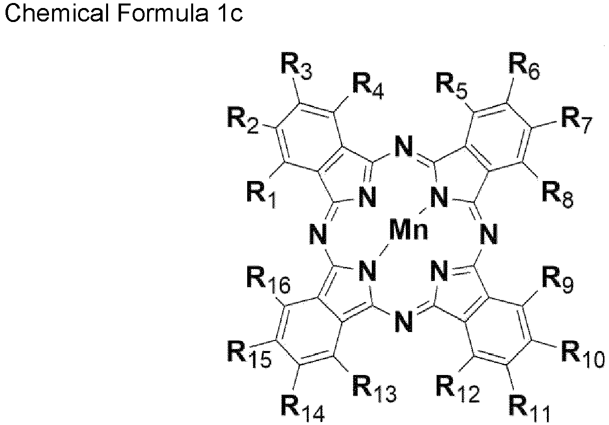

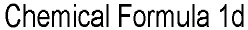

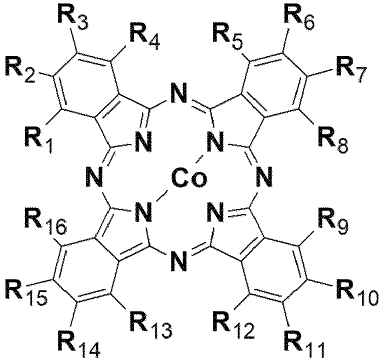

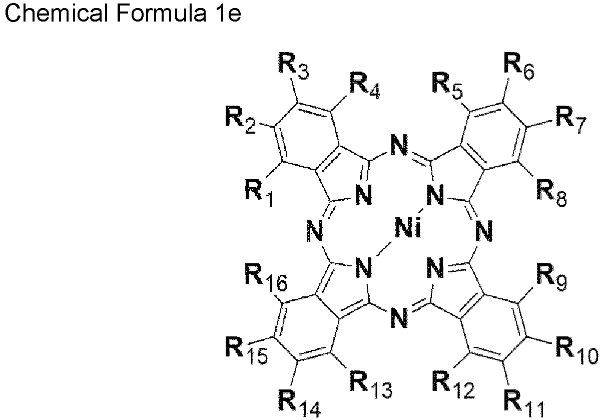

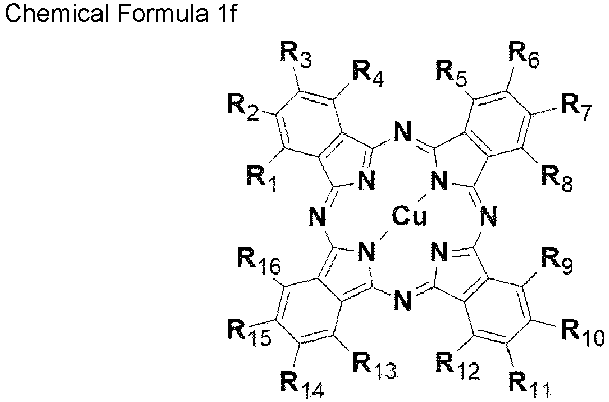

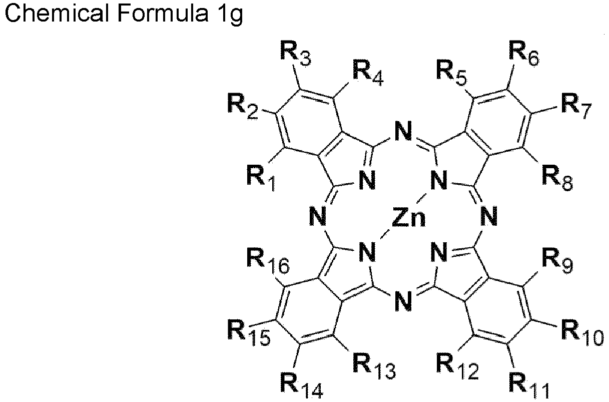

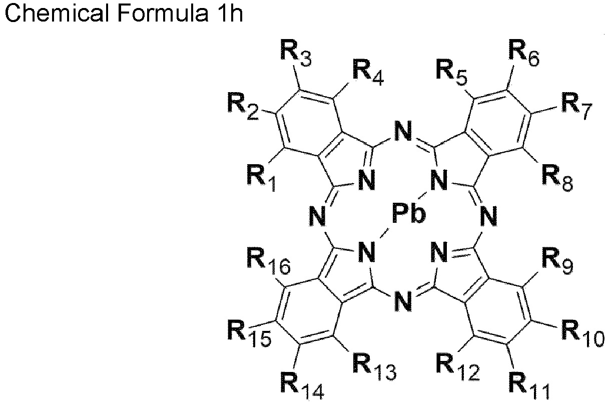

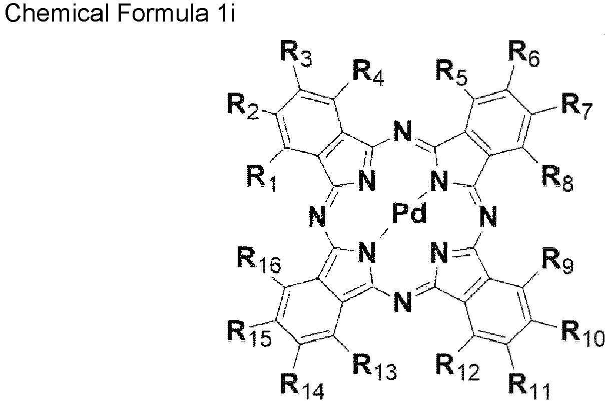

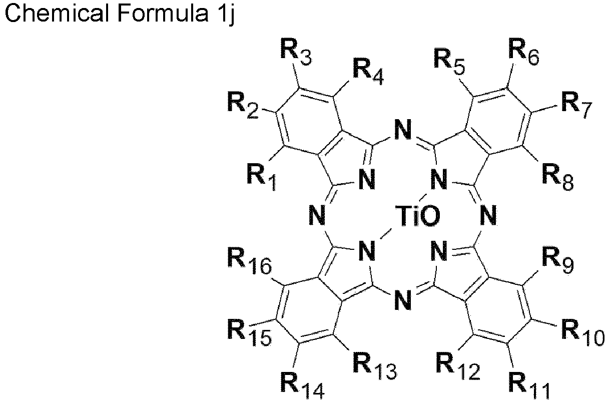

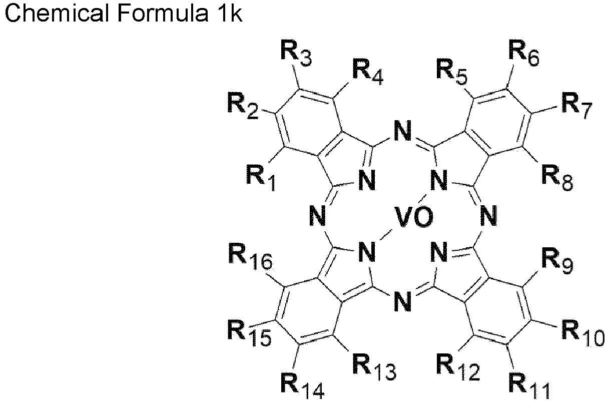

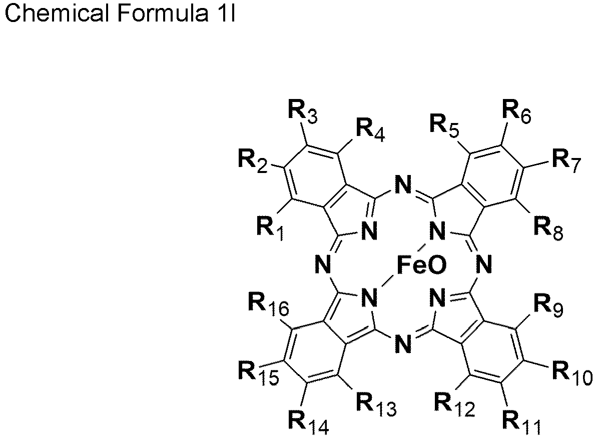

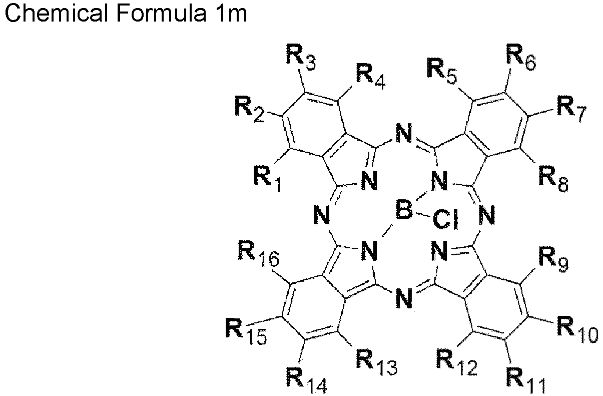

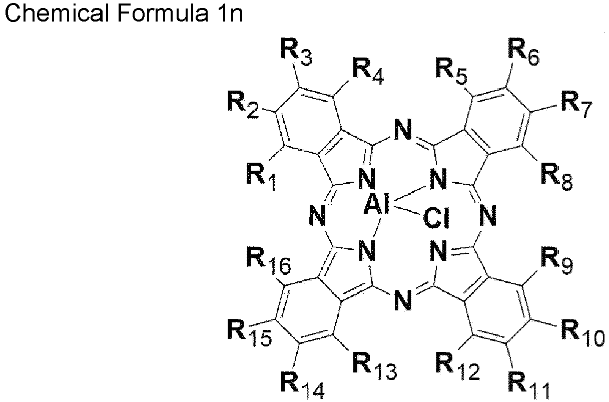

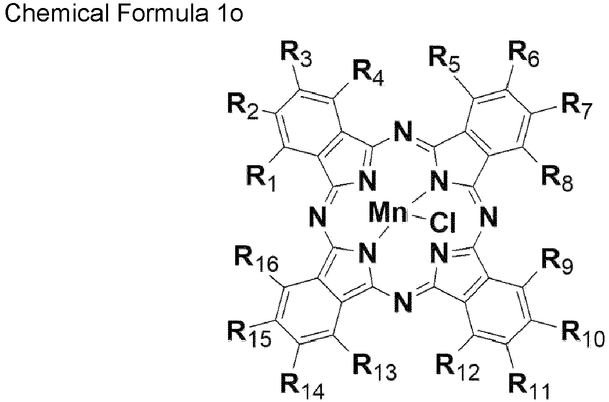

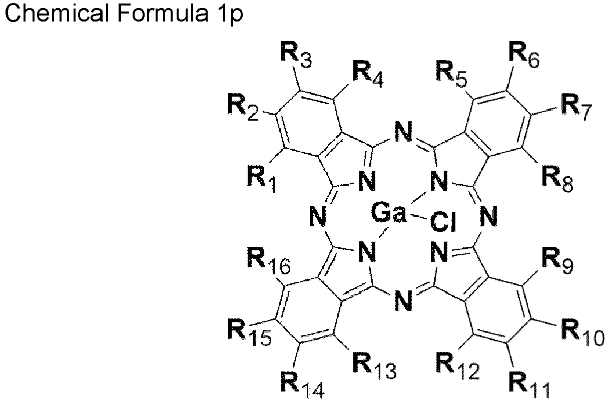

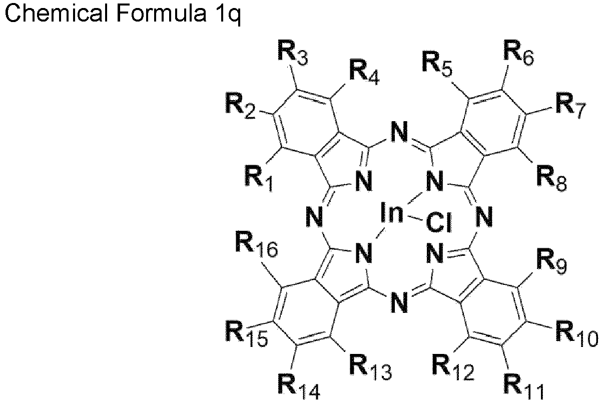

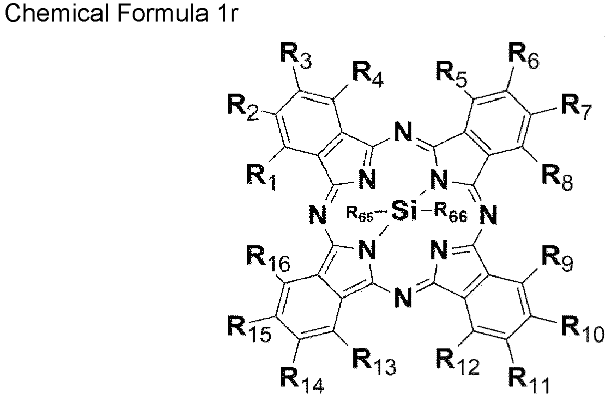

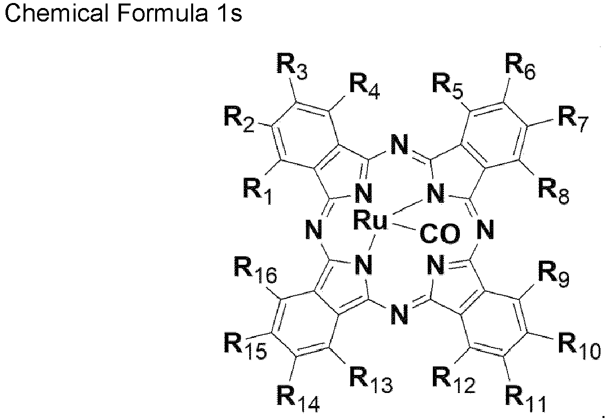

3. The rechargeable lithium battery (100) as claimed in claim 1 or 2, wherein M is Fe, x is 2 or 3, and y is 1.

4. The rechargeable lithium battery (100) as claimed in any of the claims 1 to 3, wherein the compound comprises iron phthalocyanine, iron phthalocyanine chloride, iron hemoglobin, iron myoglobin, or a combination thereof.

5. The rechargeable lithium battery (100) as claimed in any of the claims 1 to 4, wherein the gas capturing layer has a thickness of about 10 micrometer (µm) or more.

6. The rechargeable lithium battery (100) as claimed in any of the claims 1 to 5, wherein the gas capturing layer has a thickness of about 10 µm to about 600 µm.

7. The rechargeable lithium battery (100) as claimed in any of the claims 1 to 6, wherein an amount of the compound is about 5 wt% to about 99 wt% based on a total weight, 100 wt%, of the gas capturing layer.

8. The rechargeable lithium battery (100) as claimed in any of the claims 1 to 7, wherein the gas capturing layer further comprises a binder, preferably wherein an amount of the binder is about 1 wt% to about 95 wt% based on, a total weight, 100 wt%, of the gas capturing layer.

9. The rechargeable lithium battery (100) as claimed in any of the claims 1 to 8, wherein the gas capturing layer is on the battery case (50).

10. The rechargeable lithium battery (100) as claimed in any of the claims 1 to 9, wherein the rechargeable lithium battery (100) further comprises an insulation tape between the electrode assembly (40) and the battery case (50), and
the gas capturing layer is on the insulation tape and is between the insulation tape and the battery case (50) or is between the electrode assembly (40) and the insulation tape.

11. The rechargeable lithium battery (100) as claimed in any of the claims 1 to 10, wherein,
the rechargeable lithium battery (100) further comprises an insulation tape around the electrode assembly (40), and
the gas capturing layer is between the insulation tape and the battery case (50), or is between the electrode assembly (40) and the insulation tape.

12. The rechargeable lithium battery (100) as claimed in any of the claims 1 to 11, wherein the rechargeable lithium battery (100) further comprises a finishing tape around the electrode assembly (40), and
the gas capturing layer is between the finishing tape and the battery case (50).

13. The rechargeable lithium battery (100) as claimed in any of the claims 1 to 12, wherein the rechargeable lithium battery (100) further comprises a finishing tape around the electrode assembly (40), and
the gas capturing layer is between the electrode assembly (40) and the finishing tape.

14. The rechargeable lithium battery (100) as claimed in any of the claims 1 to 13, wherein the electrode assembly (40) comprises a negative electrode (20), a separator (30), and a positive electrode (10).

15. The rechargeable lithium battery (100) as claimed in any of the claims 1 to 14, wherein the rechargeable lithium battery (100) comprises a pouch battery, a can battery, or a combination thereof.
